Europäisches Patentamt

European Patent Office

Office européen des brevets

(19)

(11) **EP 1 006 436 A1**

## (12) EUROPEAN PATENT APPLICATION
published in accordance with Art. 158(3) EPC

(43) Date of publication:
07.06.2000 Bulletin 2000/23

(21) Application number: 99926776.8

(22) Date of filing: 23.06.1999

(51) Int. Cl.7: **G06F 7/52**, G06F 1/02
// G06F101:08

(86) International application number:
PCT/JP99/03352

(87) International publication number:
WO 99/67704 (29.12.1999 Gazette 1999/52)

(84) Designated Contracting States:
DE FR GB

(30) Priority: 23.06.1998 JP 21472598
22.06.1999 JP 17611699

(71) Applicant: Ogata, Wataru
Yokosuka-shi, Kanagawa 239-0820 (JP)

(72) Inventor: Ogata, Wataru
Yokosuka-shi, Kanagawa 239-0820 (JP)

(74) Representative:
Patentanwälte
Lippert, Stachow, Schmidt & Partner
Frankenforster Strasse 135-137
51427 Bergisch Gladbach (DE)

## (54) SYSTEM FOR DIVISION USING SMALL-CAPACITY MEMORY

(57) A method for calculating the initial value in the Newton-Raphson method by synthesization using values retrieved from a small table stored in a memory by means of an arithmetic unit. The method of the invention is free from problems of conventional dividers such as a long operating time and a large circuit scale. The iterative calculation circuit of the Newton-Raphson method is mounted as an arithmetic circuit. A reciprocal calculating circuit having a short operating time, usable as a pipeline system, and exhibiting an improved throughput and a dividing circuit comprising the reciprocal calculating circuit are mounted. Part of the multiplying circuit included in the iterative calculation circuit is omitted by regarding the calculation precision, thus making it a compact iterative calculation circuit. Further by using the interim results of the calculation, the calculation precision is readily enhanced. Thus, a method for calculating the minimum size required for the table used for calculating the initial value is provided, and means for designing a circuit of a requisite minimum while fulfilling the required calculation precision is also provided.

Fig. 3

EP 1 006 436 A1

**Description**

Technical Field:

This invention relates to an operational procedure in a computer system. More particularly, this invention relates to a divisional procedure in which a reciprocal number of a given divisor is calculated and this calculated value is multiplied by a dividend to perform a division.

Unless otherwise particularly restricted in the specification of present patent application, when a floating-point format of simple precision is applied, a procedure for realizing an operation of a reciprocal number or a divisional procedure will be described in reference to, as an example, a data format of floating-point of simple precision in the IEEE-754 standards, i.e. a data format composed of 1 bit of sign part, 8 bits of exponent part and 23 bits of mantissa part (provided that a precision of mantissa part is 24 bits while additionally applying an MSB which is always 1).

This is an assumption for the sake of description of the invention and when a circuit is practically mounted in accordance with an operational procedure actually described in the present invention, it is satisfactory that each of the parameters is adjusted.

Background of the Invention:

A floating-point division is an operation item in which it requires the longest duration in time in the four arithmetic operations. In order to realize the division, it is roughly classified into a subtraction shift type division, a method for combining tables with operation and a multiplication type division.

As the subtraction shift type division, the simplest method consists in a procedure in which a shift instruction, an addition or subtraction instruction (a subtraction instruction or an addition instruction) and a conditional branch instruction are combined to calculate a quotient bit by bit. In addition, a procedure for performing a repetitive processing of shifting, subtraction or addition is also practically mounted and this can perform the processing faster than that of the combination of the aforesaid instructions.

As a procedure for performing a faster division in the subtraction shift type division, there is provided an SRT method. This is a procedure in which an operation for taking a divisor and a dividend from an upper location by several bits and attaining a quotient of several bits on the basis of these bits or an operation for retrieving a table with these bits being applied as index to attain a quotient by several bits is repeated to get a quotient of requisite precision, wherein the number of steps of processing is reduced as compared with that of the procedure for taking a quotient bit by bit as described above. In accordance with a comparison between a subtraction shift type division unit and a multiplication type division unit practically mounted in an LSI, it is advantageous to apply an SRT method having a high radix.

It is also proposed to provide a procedure for combining a table and an operation in order to perform a division. This is a procedure in which the table is stored in ROM, a part of bit-string expressing a mantissa part of divisor is extracted as a bit field, calculation is performed on the basis of a value attained from the table with its content being applied as an index to get a reciprocal, this reciprocal is multiplied by a dividend to realize a division.

As the multiplication type division, there is provided a Newton-Raphson method (hereinafter called as an N/R method). This is a procedure in which an approximate value of reciprocal of given divisor is attained, an iteration calculation indicated by

$$Y_{n+1} = Y_n \cdot (2 - Y_n \cdot R_m)$$

[$R_m$ is a mantissa part of divisor]

is carried out to attain a reciprocal of predetermined precision, this value is multiplied by a dividend to realize a division.

In the case of the subtraction shift type procedure, it is necessary to judge a condition every time one step is processed, so that there remains a problem that an operation requires much time to realize the division under a combination of a shift instruction, an addition and subtraction instruction and a conditional branch instruction by a programming. In addition, since there is a data dependency between the instructions, there is also a problem that it is difficult to improve a processing speed even if a computer having an architecture with an instruction pipe-line configuration is used.

In the case of that a subtraction shift type division is executed by repeating a shifting or an adding or a subtraction through a micro-programming, it can be processed at a higher speed as compared with that of the procedure in which each of the aforesaid instructions is combined to each other. However, this subtraction shift type division shows a problem that it requires an excessive amount of processing time as compared with that of the case in which a single adding instruction, a subtraction instruction and a multiplication instruction (hereinafter these instructions are called in total as an adding-subtraction-multiplication instruction) are applied.

In the case of the SRT method having a high radix, although it shows a high speed operation as compared with the aforesaid simple subtraction shift type division, there still remains a problem that it requires much number of steps. In addition, in order to perform a practical mounting of the SRT method having a high radix, it is necessary to constitute a circuit for performing a subtraction by subtracting a subtractor through a multiplication unit or to constitute a selector for selecting a subtractor to perform a subtraction in response to a temporary resolution attained by a pre-calculated subtractor corresponding to a possible temporary resolution, this method is not necessarily advantageous in view of a time duration required for operation as well as a resource to be used.

In addition, in the case of the subtraction shift type division, since the circuit resource is repeatedly used while one division is being carried out, there remains a problem that the operation circuit is occupied, a subsequent division can not be started and its throughput can not be improved.

The procedure for combining a table with an operation also has a problem that it shows a poor efficiency in actual mounting when it is practically mounted on an LSI due to the fact that even a small-sized unit may require a memory of capacity of several tens to hundreds kilo-bits for performing an operation of simple precision.

In the case of the N/R method, there has been practically mounted a circuit in the prior art that a table of initial values is stored in a memory, a requisite bit field is extracted from the MSB side in the bit-string expressing a mantissa part of the given divisor, the initial value is taken out as an index and applied to an iteration calculation.

In the case of the existing practical mounting, there have been provided many cases using a table of precision of about 8 bits or the like, although, this procedure shows a problem that it is necessary to perform the iteration calculation two times for attaining a reciprocal of simple accuracy and it takes much time when an iteration calculation is performed under a combination of addition, subtraction and multiplication instructions.

In order to attain a precision of 24 bits through one time iteration, it is necessary to provide a precision of minimum 12 bits as an initial value and in the case that this is made directly as a table, it is minimum required to provide a memory having a capacity of 12 bits with a width of 4096 words, i.e. 49,152 bits (6 kilo-bytes).

Actually, it is also necessary to arrange a guard bit for performing an operation and it is required to provide a capacity of several times of it, so that it shows a problem that it occupies a large area to constitute it on the LSI and so its efficiency is poor. In addition, it shows a problem that it can not be mounted in a programmable logic device presently available in the market (hereinafter called as PLD, wherein the PLD herein defined includes some programmable devices such as a CPLD, i.e. Complex Programmable Logic Device or FPGA. i.e. Field Programmable Gate Array or the like).

In addition, in the case that an initial value having a precision of 12 bits is attained and one time iteration calculation is carried out, a recurrence formula expressed by

$$Y_{n+1} = Y_n \cdot (2 - Y_n \cdot R_m)$$

$[R_m$ is a mantissa part of a divisor]

, more practically, an operation expressed by

$$Y_1 = Y_0 \cdot (2 - Y_0 \cdot R_m)$$

is performed. However, in the case that this operation is realized under a combination of separate operation codes, there occurs a problem that a data dependency is produced between a plurality of instructions, an efficient processing can not be carried out in a processor having an instruction pipe line or an operation pipe line, a conflict using the operation device is produced, it occupies the operation device and so other instructions can not be executed.

There has been provided an operation device having two modes, i.e. one mode in which the conventional operation of 24 bits x 24 bits is performed after modifying an existing multiplication unit and the other mode in which a product of an initial value $Y_0$ and a mantissa $R_m$ of a divisor is subtracted from 2.0 while this product is being calculated. The latter mode is performed such that the upper level bit is operated with a complementary number of 2 of the product being applied, so that it can be realized without scarcely adding a circuit. However, also in this case, there remains a problem that the iteration calculation can not be carried out together with other operations and its performance is deteriorated. Further, since the same multiplication unit is used repeatedly for repetition of the N/R method, a subsequent division can not be started until one division operation is completed and its throughput can not be improved.

Additionally, in the case that a reciprocal of high precision (for example, 48 bits of twice of a simple precision are applied herein) is calculated by the N/R method, it is necessary to apply a reciprocal of precision of 24 bits as an initial value to perform one time iteration calculation or to apply a reciprocal of precision of 12 bits to perform iteration calculation twice, and the former case has a problem that a size of the required table becomes large. In turn, in the case of the latter one, there remains a problem that a size of circuit for performing an iteration calculation of second time becomes large and its operation time is extended.

In addition to this problem, there remains a further problem that a large-sized table can not be mounted in the PLD having a high restriction in a circuit resource and a calculation of reciprocal or a division performed by the N/R method can not be practically mounted.

Disclosure of the Invention:

The present invention has been invented to solve the aforesaid various problems and as its object it provides a division circuit using a small-sized low zero point and high throughput reciprocal calculation circuit.

More practically, at first, there is provided means for making a small-sized table applied for attaining an initial value of the N/R method. That is, there is provided a calculation means in which a small-sized table can be sufficiently applied not by storing the initial value itself in the table but by inputting the value retrieved from the small-sized table into the operation unit to calculate an initial value. Further, there is provided means for determining a minimum size of the table to be required or the contents of the table.

Next, in the case that a reciprocal of required precision is calculated after performing an iteration calculation with the N/R method in reference to the attained initial value, an exclusive circuit for performing an iteration calculation is constituted in order to avoid an increasing in calculation time caused by a calculation under a combination of operation codes by a programming and then a circuit capable of improving a throughput by arranging the pipe line format. Further, there is provided a configuration of an operation circuit to save a circuit resource required in its exclusive circuit, reduce a circuit size and shorten a calculation time.

In addition, there is provided a configuration of the operation circuit in which an approximate value of a reciprocal of high precision is not required in order to calculate a reciprocal of high precision through the N/R method, the time of iteration is not increased and a precision of the reciprocal attained through calculation.

Further, there is provided a method for efficiently mounting either a reciprocal calculation circuit using the N/R method or a division circuit using the N/R method on the PLD.

In the following description, a mantissa part $R_m$100 of a divisor R expressed by the floating-point format (in the present specification, it is assumed that it is normalized in a range of $0.5 \leq R_m < 1.0$ and this is called as a mantissa part 100 of the divisor) is noted. In the case that it is merely expressed as a divisor, it is meant by a mantissa part 100 $(R_m)$ of a given divisor R unless otherwise specially defined in the specification.

In the present invention, the division is realized in such a way that a reciprocal is calculated by the N/R method, this is multiplied by a dividend by a separate multiplication instruction to attain a quotient. Or, a circuit for multiplying a reciprocal attained by the N/R method to a dividend is added to realize the division.

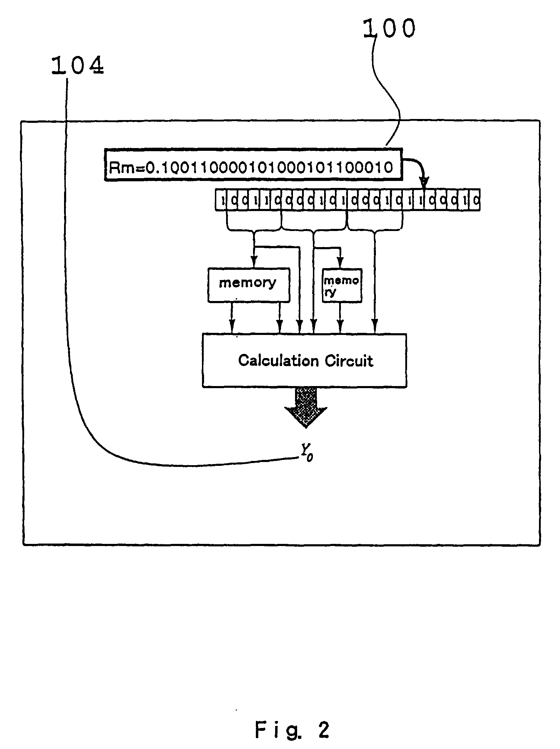

In the case of the invention described in Claim 1, a bit string expressing the mantissa part 100 of given divisor is divided into a plurality of bit fields, the values are retrieved from the table stored in the memory with the contents being applied as index, the value and the content of the bit fields are applied to perform a calculating operation and to attain an initial value 104. In Fig.2 is illustrated its technical concept.

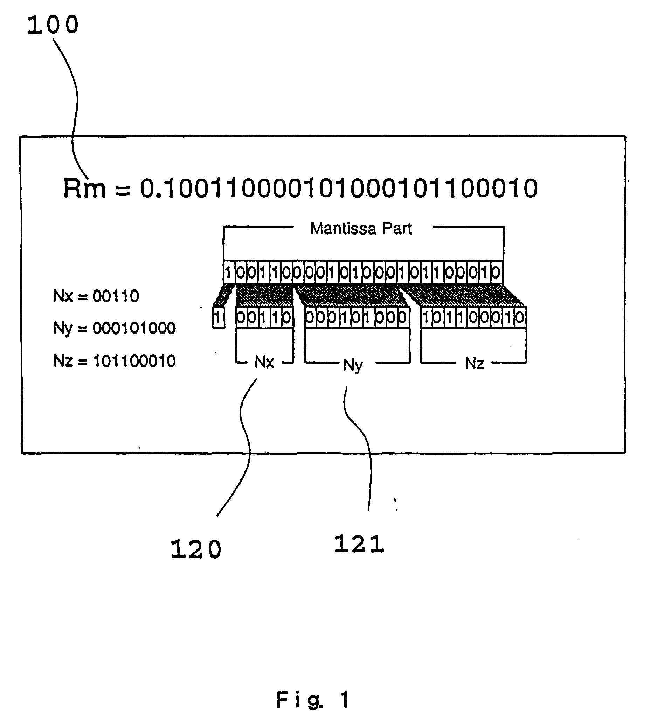

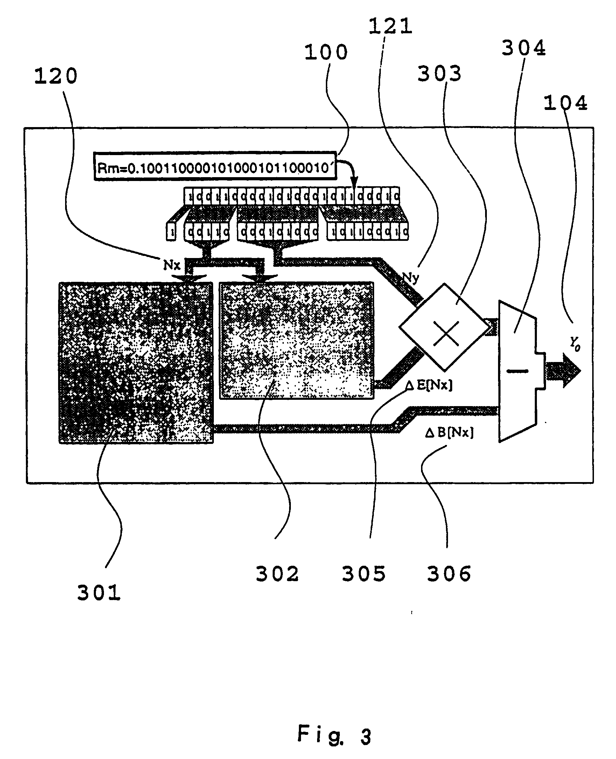

In the case of the invention described in Claim 2, a bit-string expressing a mantissa part 100 of a given divisor is divided into three bit fields except the MSB as shown in Fig. 1, two bit fields in them (a bit field 120 at the MSB side and intermediate bit field 121) are applied, a calculating operation is carried out under application two values (a value 305 and a value 306) attained by retrieving the table with the content in the bit field 120 being applied as an index as shown in Fig.3 and the content of the bit field 121, a primary approximation is performed to attain an approximate value of a reciprocal of the divisor 100, i.e. an initial value 104.

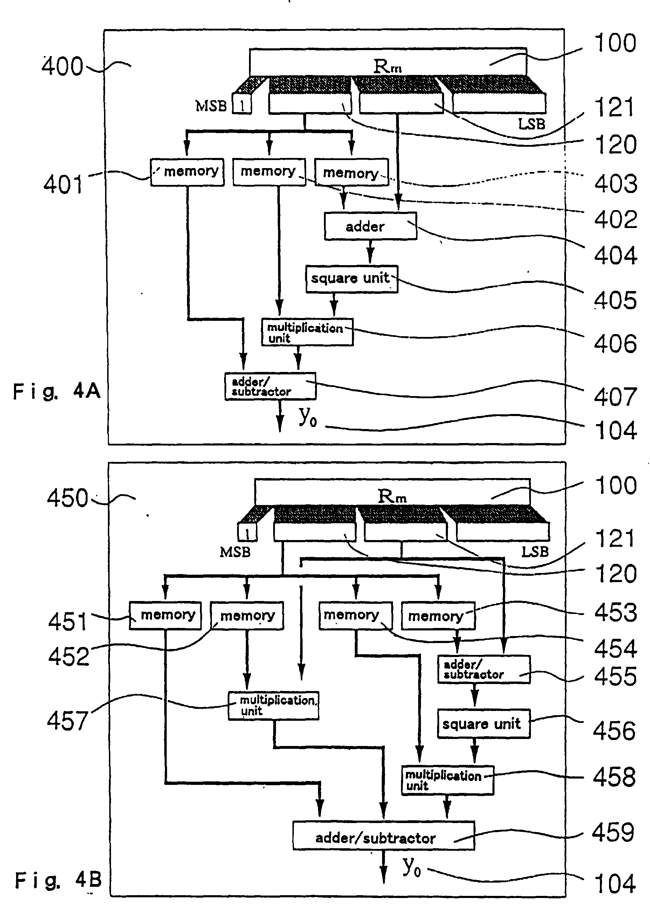

In the case of the present invention described in Claim 3, a bit-string expressing the mantissa part 100 of a given dividend is divided into three bit fields except an MSB, two bit fields in them (a bit field 120 at the MSB side and an intermediate bit field 121) are applied, a calculating operation is carried with a value attained by retrieving the table with the content of the bit field 120 being applied as an index and the content of the bit field 121, a secondary approximation is carried out to attain an approximate value of a reciprocal of divisor 100, i.e. an initial value 104. Examples of the circuit configuration are shown in a configuration 400 and a configuration 450 in Figs.4A and 4B, respectively.

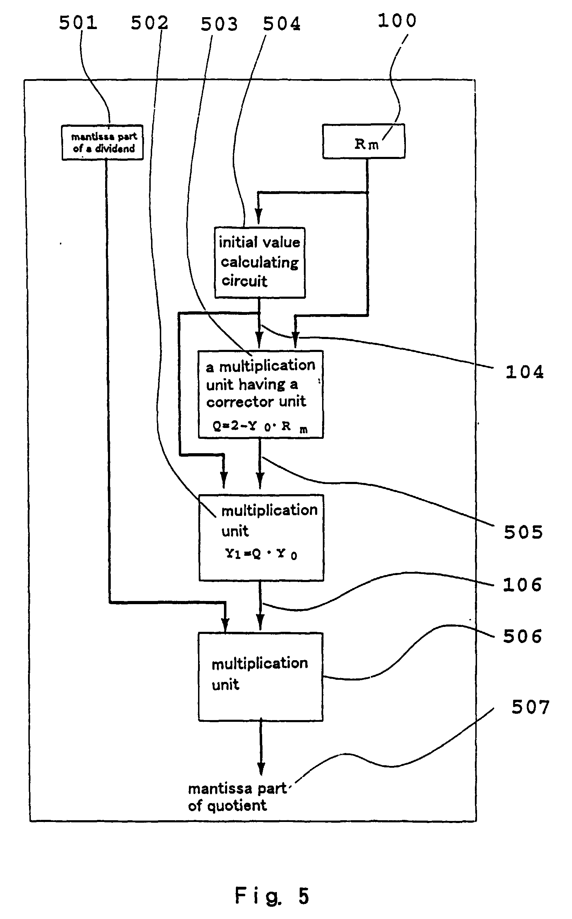

In the case of the present invention described in Claims 4 and 5, an iteration calculation itself of the N/R method is practically mounted. Its schematic configuration is shown in Fig.5. There are provided a mantissa part 100 of a divisor and a mantissa part 501 of a dividend, it is comprised of an initial value calculating circuit 504, a multiplication unit 503 having a corrector unit, and a multiplication unit 502. In this case, it is preferable that a reciprocal number 106 is taken out and multiplied by a mantissa 501 of the dividend with a separate multiplication instruction and then a multiplication unit 506 for multiplying it by the mantissa part 501 of the dividend to calculate a mantissa part 507 of quotient.

The initial value calculation circuit 504 may calculate an approximate value of a reciprocal number of a given dividend, i.e. an initial value 104 of the N/R method in reference to the mantissa part 100 of the given dividend. In the prior art method, a bit field was extracted from the bit-string expressing the mantissa part 100 of the dividend and the initial value was retrieved from the table with the content being applied as an index.

It is also applicable that as the initial value calculation circuit 504, a circuit for performing an iteration of the N/R method on the basis of a more rough approximate value of a reciprocal number of the mantissa part 100 of the divisor to calculate a reciprocal number having a required precision is employed and its output may be used as the initial value 104. Or, it is also applicable that another convenient reciprocal number calculating circuit is used.

The multiplication unit 503 having a corrector unit (having a circuit or a function not merely outputting a product, but applying modification to the attained product) performs a calculation to subtract a product of the initial value 104 and the mantissa part 100 of the divisor from 2.0 to output a value 505. However, since it is satisfactory to take a complementary number of 2 of the product and operate the location of 2.0, the number of used elements and the calculating time are scarcely changed from those for a simple multiplication circuit.

In the case of the present invention described in Claim 6, the given initial value 104 is rounded to a minimum requisite precision including a guard bit for calculation, its lower level bit is set to be 0, thereby an iteration calculating circuit of the N/R method is simplified.

In the case of the present invention described in Claim 7, when the value 106 is to be attained,

$$Y_1 = Y_0 \cdot (2 - Y_0 \cdot R_m)$$

is modified to be divided into

$$Y_1 = Y_0 + \Delta Y$$

and

$$\Delta Y = Y_0 \cdot (1 - Y_0 \cdot R_m) = Y_0 \cdot \beta$$

to calculate once a difference $\Delta Y$ and finally a reciprocal number 106 is attained.

More practically, a value 111 in which a product of the initial value 104 and the mantissa part 100 of the divisor is subtracted from 1.0 indicated in

$$\beta = (1 - Y_0 \cdot R_m)$$

is defined as $\beta$, this value is multiplied by the initial value 104 to make a difference 109, and further the initial value 104 is added to it to attain the reciprocal number 106.

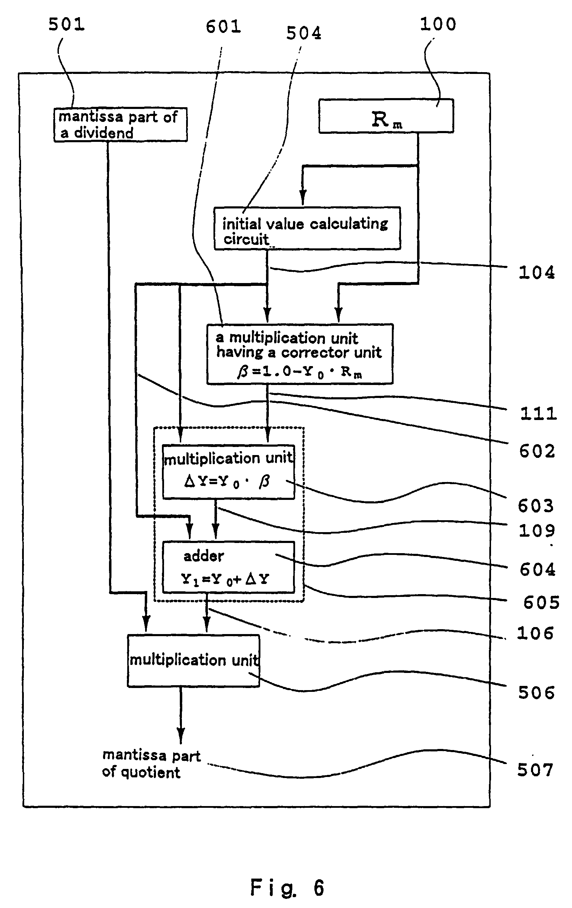

In Fig.6 is shown an example of the configuration of the operation circuit in accordance with Claim 7. This is an example in which the product of the initial value 104 and the mantissa part 100 of the divisor is subtracted from 1.0 to attain the value 111. Modification of the equation causes a part of partial product at the multiplication unit 601 having a corrector to be eliminated and also at the multiplication unit 603, a part of the partial product is eliminated.

The multiplication unit 601 having a corrector performs a calculation indicated in

$$\beta = (1 - Y_0 \cdot R_m)$$

and performs a calculation to subtract the product of the initial value 104 and the mantissa part 100 of the divisor from 1.0. However, it is satisfactory that a complementary number of 2 of the product is taken and the level of 1.0 is operated. In addition, an absolute value of the value 111 of the result of calculation is lower than an absolute value of the value 505.

There is provided a configuration in which the initial value 104 is added through a path 602 under an application of an adder 604 to a product 109 attained by multiplying the initial value 104 to the value 111 of the result attained by the multiplication unit 601 having a corrector and then the value 106 is calculated. It is also applicable that this adder is employed as a part of an adder of the multiplication unit 603 and a block 605 is constituted as one operation unit. This fact can be similarly applied to the blocks 707,805, 904 and 1004.

In the case of the present invention described in Claim 8, a value 111 in which a product of the initial value 104 and the mantissa part 100 of the divisor is subtracted from 1.0 indicated in

$$\beta = (1 - Y_0 \cdot R_m)$$

is defined as $\beta$, this value is applied to improve a precision of calculation of a reciprocal number.

Since a value 150 when a recurrence formula of the N/R method

$$Y_{n+1} = Y_n \cdot (2 - Y_n \cdot R_m)$$

is repeated by times of (n) is expressed in the form of

$$Y_n = Y_0 \cdot \sum_{i=0}^{2n-1} \beta^i$$

under application of only the initial value 104 and the value 111, a circuit for calculating this value is practically mounted.

In addition, the value 151 in the case that the iteration is repeated by a limitless number of times to improve its precision in a limitless manner is expressed by

$$Y_\infty = Y_0 \cdot \sum_{i=0}^{\infty} \beta^i$$

under application of the initial value 104 and the value 111. In addition, a value $Y_\infty$ when a calculation of series is finished at the n-th term is expressed by

$$Y_x = Y_0 \cdot \sum_{i=0}^{n} \beta^i$$

An error at this time passes through

$$Y_\infty = Y_x + \delta y$$

and is based on a value $\delta y$ indicated by

$$\delta y = Y_0 \cdot \sum_{i=n+1}^{\infty} \beta^i$$

In the case of the present invention described in Claim 9, a circuit to perform a calculation of

$$Y_x = Y_0 \cdot \sum_{i=0}^{n} \beta^i$$

for performing a calculation of series by definite number of times is practically mounted. In Fig.7 is illustrated its schematic configuration. In Fig.7. the value 111 is multiplied in sequence to attain a value of n-th power, although it is preferable that a value of the n-th power is calculated from the value 111 under application of the circuit for performing factorial calculation such as a square and a cube or the like. This is similarly applied to Fig.8 or Fig. 10.

In the case of the present invention described in Claim 10, a value of the calculation of series is applied as a table and stored in a memory, a bit field having a proper bit width is extracted from the MSB side of the bit-string expressing the value 111, the value is retrieved from the table with the bit field being applied as an index and this is used as a part of the calculation of the series. An operation for retrieving this table is similar to the case of the present inventions described in Claims 11 to 13.

As a value of the table stored in the memory, a value of total of the limitless number of terms having a higher degree than that of a certain n-th term may be used or a total value finished at the definite number of terms may be used under a condition in which a requisite precision can be attained.

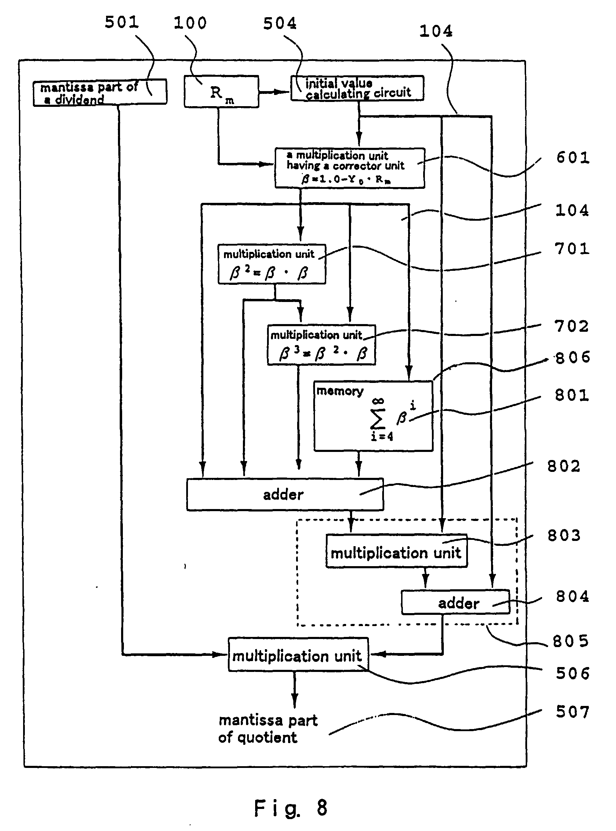

In the case of the present invention described in Claim 10, in Fig.8 is illustrated a calculation circuit as an example in which the terms up to the third or cubic degree are separately calculated, a value 801 having a total number of terms of higher degree subsequent to fourth degree is applied as a table and stored in a memory.

In the case of the present invention described in Claim 11, there is practically mounted a circuit in which values in the term 154 are applied as a table and stored in a memory 905, a bit field is extracted from the MSB side of the bit-string expressing the value 111, the value is retrieved from the table with its content being applied as an index to perform a calculation of

$$Y_\infty = Y_0 \cdot (1 + \beta + \sum_{i=2}^{\infty} \beta^i)$$

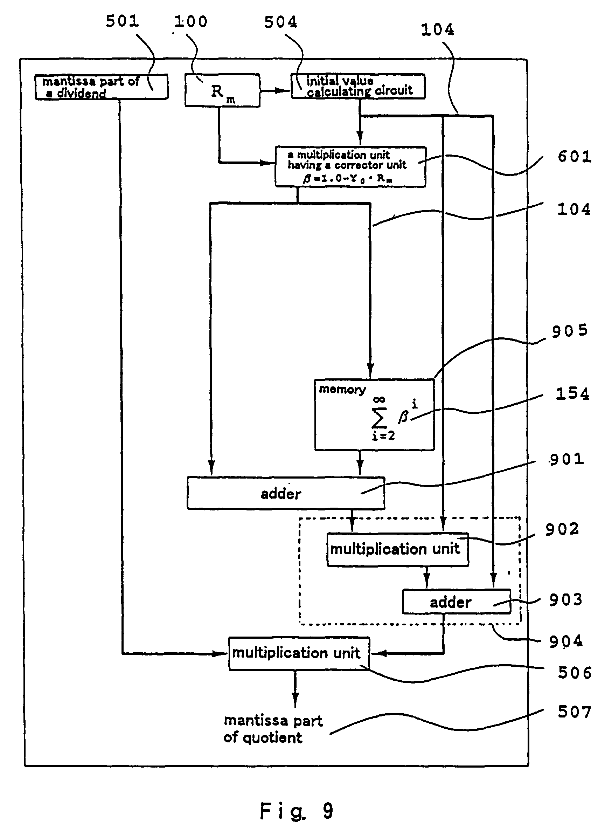

In Fig.9 is shown its configuration.

In the case of the present invention described in Claim 12, there is practically mounted a circuit in which the values in a term 155 in

$$Y_\infty = Y_0 \cdot (1 + \beta + \beta^2 + \sum_{i=3}^{\infty} \beta^i)$$

are applied in a table and stored in a memory 1005, a value of the term is retrieved from the table with the content of the bit field extracted from the bit-string expressing the value 111 to calculate

$$Y_\infty = Y_0 \cdot (1 + \beta + \beta^2 + \beta^3 + \sum_{i=4}^{\infty} \beta^i)$$

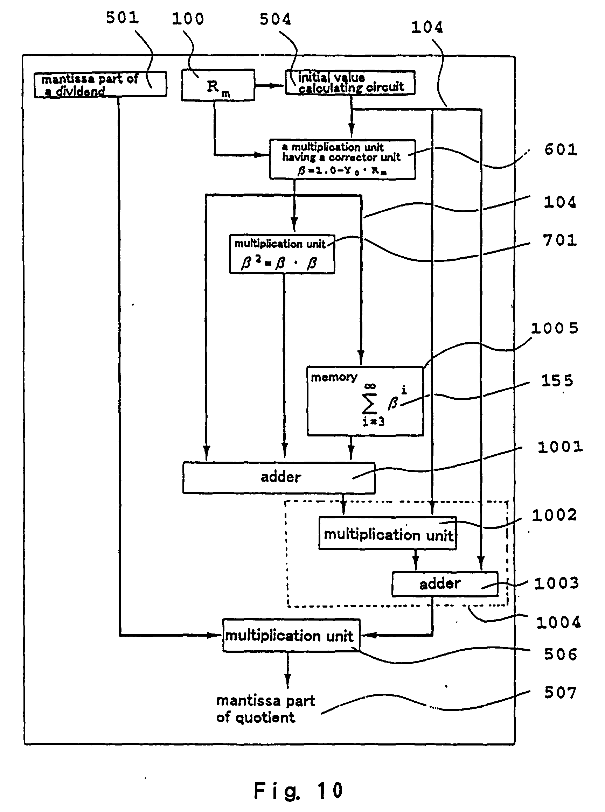

In Fig.10 is illustrated its configuration.

In the case of the present invention described in Claim 13, there is practically mounted a circuit in which the values in a term 156 in

$$Y_\infty = Y_0 \cdot (1 + \beta + \beta^2 + \beta^3 + \sum_{i=4}^{\infty} \beta^i)$$

are applied in a table and stored, in a memory 801, a value in the term is retrieved from the table with the value 111 being applied as an index. Fig.8 corresponds to its configuration.

In the case of the present invention described in Claim 14, there is practically mounted a circuit to perform a calculation of

$$Y = Y_0 \cdot (1 + \beta + \beta^2)$$

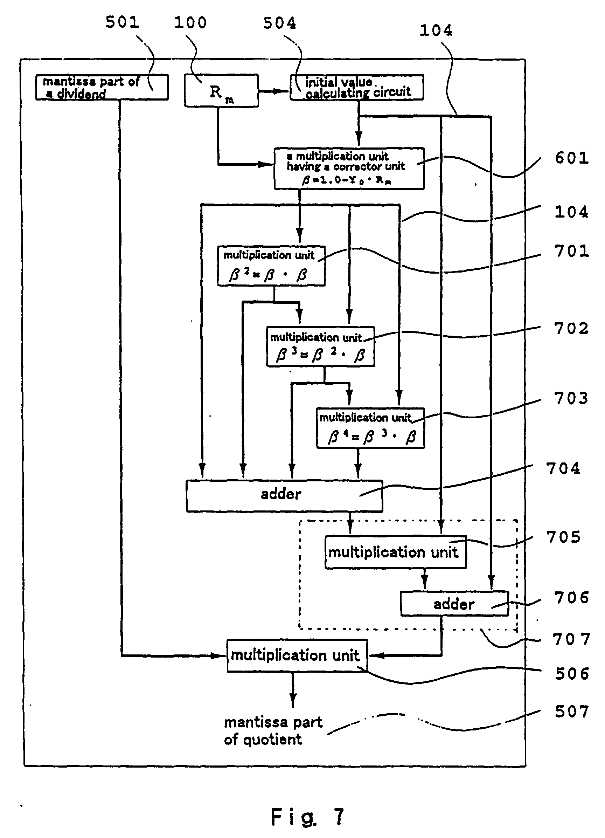

Its configuration corresponds to a form in which the multiplication unit 702 and the multiplication unit 703 are removed from Fig.7.

In the case of the present invention described in Claim 15, there is practically mounted a circuit to perform a calculation of

$$Y = Y_0 \cdot (1 + \beta + \beta^2 + B^3)$$

Its configuration corresponds to a form in which the multiplication unit 703 are removed from Fig.7.

In the case of the present invention described in Claim 16, a calculation time is shortened under application of a calculation procedure for redundancy expression at a part where a multiplication is continuously performed or at a part where addition or subtraction and multiplication are alternatively continued when a calculation of initial value, an iteration calculation and a calculation using a value in which a product of the initial value and the divisor is subtracted from 1.0 are carried out.

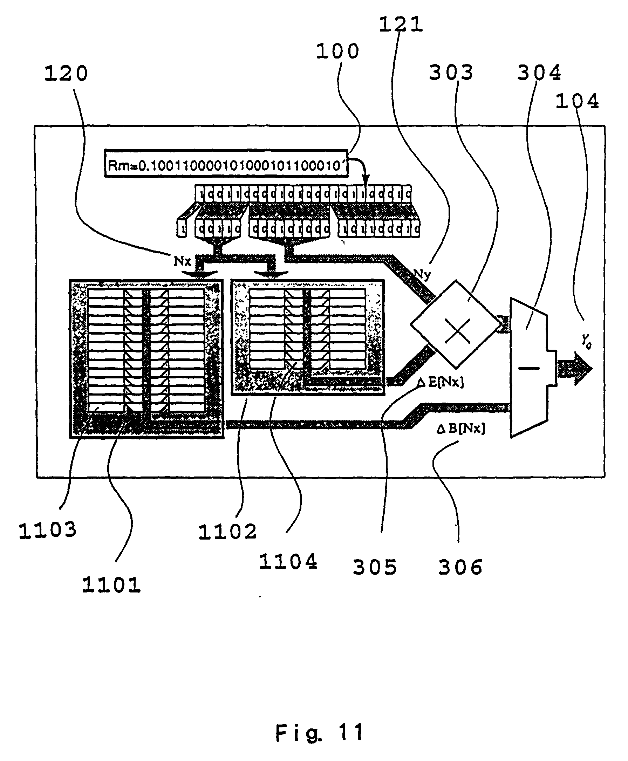

In the case of the present invention described in Claim 17, when the circuit for performing a calculation of reciprocal number is mounted on the PLD, an LUT is used as a memory and then the table used in the initial value calculation circuit is stored in it. It is also applicable that a plurality of LUTs are connected to constitute a larger ROM memory and the tables are stored in the memory. In Fig.11 is illustrated its example. 1103 is a memory in which LUT is applied as a memory cell, and 1104 is an LUT in which a plurality of LUTs are connected to act as one for constituting a large capacity memory.

In the case of the present invention described in Claim 18, when the circuit for performing a calculation of series is mounted on a PLD, LUTs are used as a ROM memory and then a table of values of a part of the series calculation is stored in the memory. It is also applicable that a plurality of LUTs are connected to act as one for constituting a large capacity ROM memory and the table is stored in the memory.

In the case of the present invention described in Claim 19, when an error 1721 allowed for an approximate value of a reciprocal number is given, it may provide an equation indicating a minimum value in the table applied for a primary approximation.

Brief Description of the Drawings:

Fig.1 is an illustrative view for showing a state in which a bit-string constituting a mantissa part of a divisor is divided into three bit fields.

Fig.2 is an illustrative view for showing a state in which an initial value in one preferred embodiment of the present invention is attained.

Fig.3 is a circuit configuration view for attaining an initial value in one preferred embodiment of the present invention.

Fig.4 is a circuit configuration view for attaining an initial value in one preferred embodiment of the present invention.

Fig.5 is a circuit configuration view in which an iteration calculation itself of the N/R method in one preferred embodiment of the present invention.

Fig.6 is a circuit configuration view of one preferred embodiment of the present invention.

Fig.7 is a circuit configuration view of one preferred embodiment of the present invention.

Fig.8 is a circuit configuration view of one preferred embodiment of the present invention.

Fig.9 is a circuit configuration view of one preferred embodiment of the present invention.

Fig.10 is a circuit configuration view of one preferred embodiment of the present invention.

Fig.11 is an illustrative view for showing a state in one preferred embodiment of the present invention in which a look-up table is used as a ROM and a table used in an initial value calculation circuit is stored in the memory.

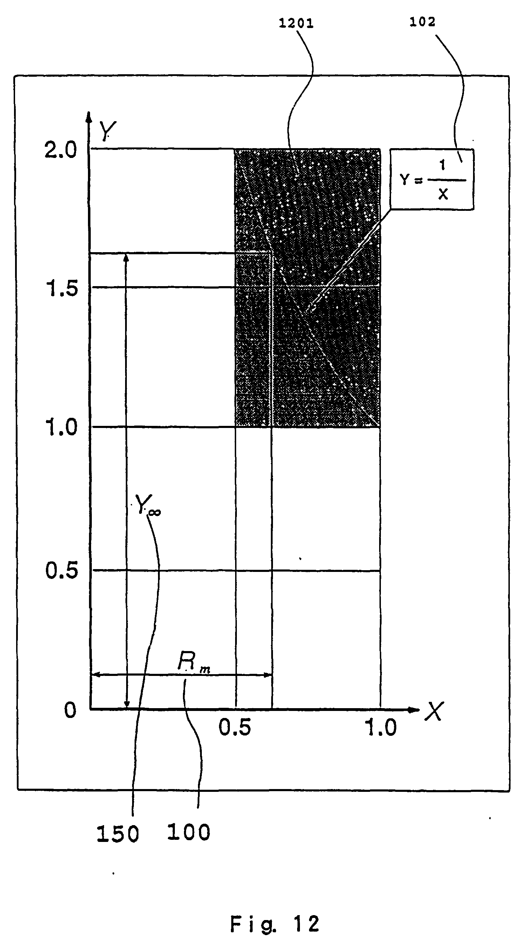

Fig.12 shows a part of a curved line $y = 1/x$ .

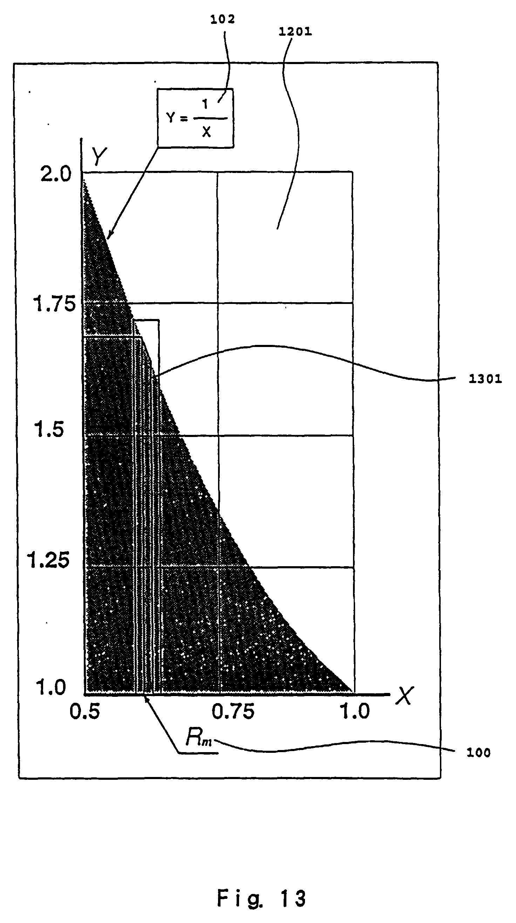

Fig.13 is a partial enlarged view of a curved line in Fig.12.

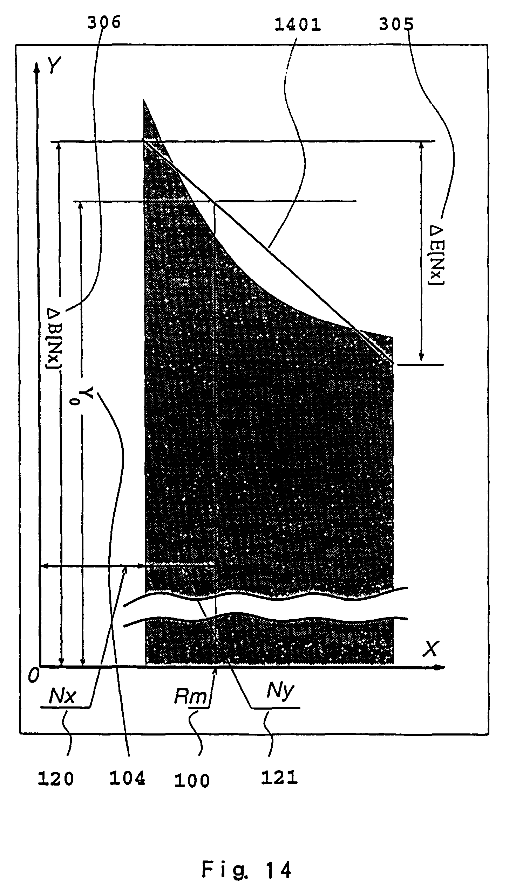

Fig.14 is a partial enlarged view of a curved line in Fig. 13.

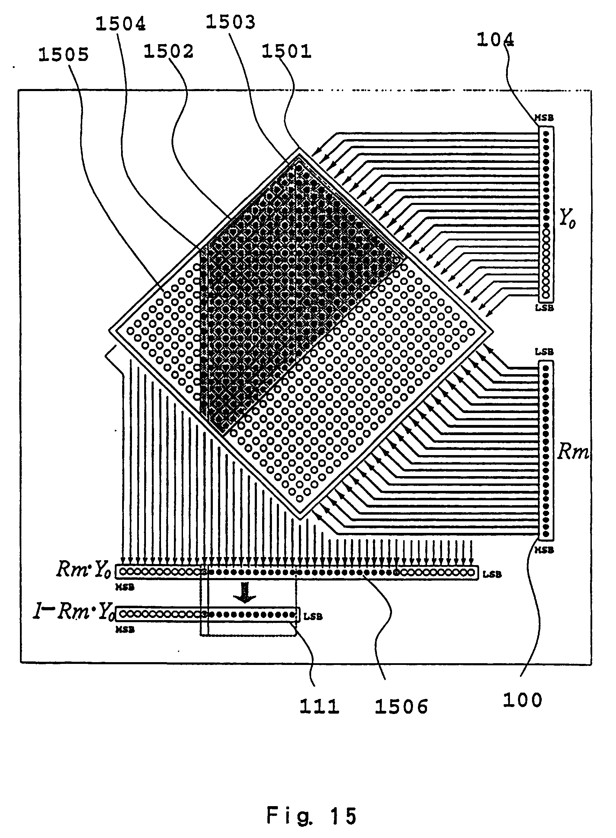

Fig.15 is an illustrative view for showing a state in which an iteration calculation circuit of the N/R method is simplified.

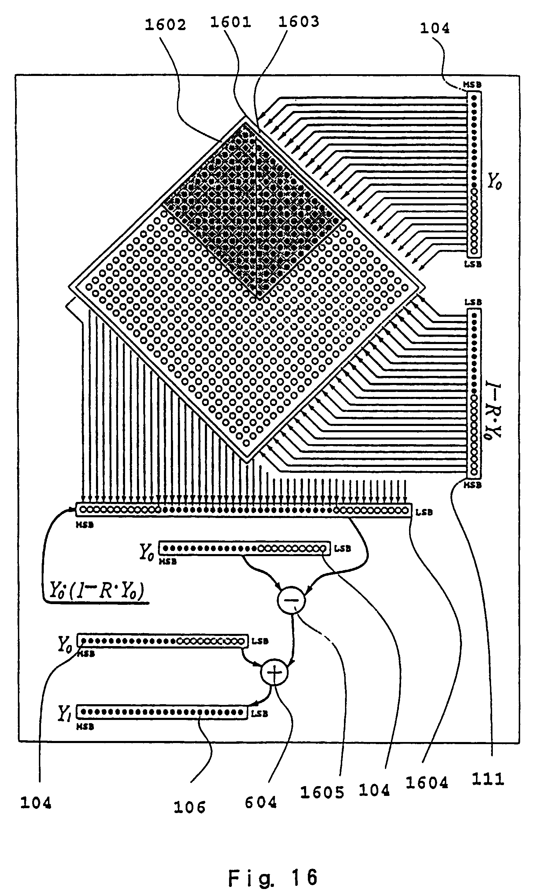

Fig.16 is an illustrative view for showing a state in which an iteration calculation circuit of the N/R method is simplified.

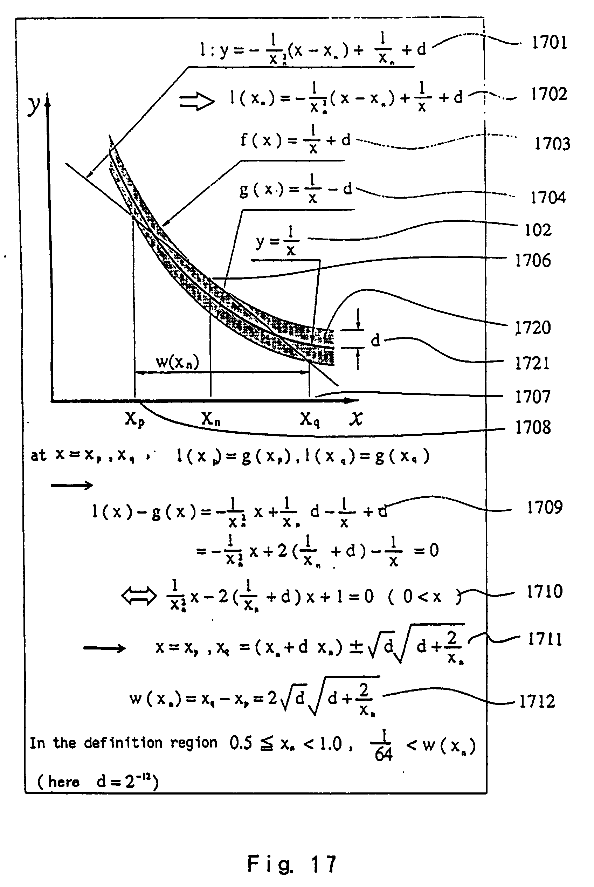

Fig.17 is an analytical illustrative view for showing the number of sections in primary interpolation.

Preferred Embodiments of the Invention:

Example

Preferred embodiment in which the invention described in Claim 1 is applied to a calculation of a single precision will be described as follows. When the mantissa part 100 ($R_m$) of the divisor expressed by a bit-string shown in Fig.1 is given, one bit of MSB is placed from this upper level, 5 bits are taken and a bit field 120 ($N_x$) is set. Subsequently, 9 bits are taken and a bit field 121 ($N_y$) is set. Then, a definition region $0.5 \leq R_m < 1.0$ of the divisor 100 is divided into 32 sections, and an initial value in each of the sections is attained in a precision of 12 bits.

Fig.12 is a part of a curved line expressed by

$$y = \frac{1}{x}$$

and in Fig. 13 are shown in an enlarged scale a definition region $0.5 \leq R_m < 1.0$ of the mantissa part 100 of the divisor and a part where a value region of its reciprocal number of $Y = 1/R_m$ (where, $1.0 < 1/R_m \leq 2.0$) is set (a colored part 1201).

In Fig.13, the definition region is divided into 32 sections, the value of the bit field 120 ($N_x$) is used and a section near the given divisor is set. A column-like portion indicated by a dark color part 1301 is a selected section and a primary approximation is carried out in it. In Fig.14 is illustrated one in which this part is enlarged.

In Fig.3 is shown a circuit configuration in which a primary approximation calculation is performed. Values required in a primary approximation in each of the sections are an approximate value 306 of a reciprocal number in each of the sections and a value 305 of inclination of a line used in a primary approximation in the section and a memory 301 of 14 bits and 32 words is applied to the former and a memory 302 of 9 bits and 32 words is applied to the latter. It is satisfactory that a memory of total capacity of 736 bits is prepared.

The circuit is comprised of a memory of 14 bits and 32 words; a memory 302 of 9 bits and 32 words; a multiplication unit 303; and a subtractor 304. A value 305 of gradient retrieved from the memory 302 and a bit field 121 are multiplied by the multiplication unit 303, the product is subtracted from an approximate value 306 retrieved from the memory 301 under application of the subtractor 304 to calculate an initial value 104.

An approximate value 306 of $Y = 1/R_m$ in the selected region is retrieved from a minor capacity memory 301 with the field 120 being applied as an index. In concurrent with this operation, a value 305 of gradient in a line 1401 in this section is retrieved from a minor capacity memory 302. Subsequently, a value of the field 121 is multiplied by the gradient 305 and subtracted from an approximate value 306 and then the initial value 104 is attained through

$$Y_0 = \Delta B[N_x] - \Delta E[N_x] \cdot N_y$$

This value has a precision more than 12 bits as a reciprocal number of the mantissa part 100 of the divisor.

In addition to this procedure, it is also preferable to apply another procedure in which each of the approximate values at a left end and a right end of the line 1401 of the primary approximation in the section is stored in the two memories and a circuit for taking an intermediate point by the bit field 121 is applied to calculate an approximate value.

In order to attain a reciprocal number 106 having a precision of 24 bits in reference to the initial value 104 provided in this way, it is satisfactory to calculate

$$Y_1 = Y_0 \cdot (2 - Y_0 \cdot R_m)$$

In Fig.15 or Fig.16 is shown the preferred embodiment to which the present invention of Claims 6 and 7 is applied in the case that the division of single precision is carried out. Since the initial value 104 has a precision of 12 bits, a guard bid of 2 bits for the operation is added and 14 bits are taken from the MSB and the remaining 10 bits at the LSB side are set to 0. With such an arrangement as above, it is satisfactory that the operation for 14 bits is carried out from the MSB side. This procedure is also applied to an intermediate result when the N/R method is repeated.

Fig.15 indicates a partial product of 576 terms (a region 1501) in a multiplication operation in which the mantissa part 100 of the divisor is multiplied by the mantissa part of each of 24 bits of the initial value 104. As described above, if a position of a purposive bit is noted, it is satisfactory to consider only a partial product of a dark color section 1502 (including a light color region 1503).

If there occurs no problem in the case that a precision of calculation to be required is low, the section in the region 1503 may be eliminated in reference to the terms of corresponding degree from the LSB side. In this case, it is possible to keep at a certain degree a precision of calculation by adding a proper constant term in place of the eliminated terms.

The attained product 1506 is rounded, a complementary number of 2 is taken and a level of 1.0 is operated to calculate the value 111.

In addition, all the upper level bits of the value 111 become 1 without fail (when a relation of $Y0 \times R_m > 1.0$ is applied) or become 0 (when a relation of $Y0 \times R_m \leq 1.0$ is applied). Due to this fact, a calculation is performed up to the level corresponding to the partial product 1504 and if it is discriminated that the level is 0 or 1, the state of the upper level bit more than 1 can be acknowledged. With such an arrangement as above, it is possible to eliminate a calculation of the term of partial product in the region 1505 (white color).

Subsequently, a value 104 is further multiplied to it. Its state is shown in Fig.16. This state corresponds to a block 605 in Fig.6. Also in this case, it is satisfactory that a calculation about an invalid bit is eliminated and a calculation is carried out for the term of dark color part indicated in the region 1602. In addition, it is satisfactory that the adder 604 and the subtractor 1605 are treated as one term of the adder constituted in the multiplication and the block 605 may be constituted as one operation unit. It is determined whether or not the initial value 104 is subtracted from the product 1604 by the subtractor 1605 in response to the state of upper level bit of the value 111 (the level of the partial product 1504).

In addition, if it is satisfactory that the part of the light color region 1603 shows a low precision in calculation to be required, the term of corresponding degree may be eliminated from the LSB side. In this case, it is possible to keep at a certain degree a precision of calculation by adding a proper term of constant in place of the eliminated term.

As described above, a calculation of reciprocal number of single precision composed of a calculation of initial value and an iteration of the N/R method can be practically mounted. A circuit resource to be used is small as compared with the case in which two prior art multiplication units are added for performing an iteration calculation.

Referring to Fig. 17, the preferred embodiment about Claim 19 will be described as follows.

When there is present a curved line expressed by

$$y = \frac{1}{X}$$

a curved line above an allowable error 1721 allowed to the initial value 104 is expressed as

$$f(x) = \frac{1}{x} + d$$

and a curved line below it is expressed as

$$g(x) = \frac{1}{x} - d$$

If there is an initial value within the colored region 1720 held by these two equations, a reciprocal number of predetermined precisions can be attained by the iteration calculation of the N/R method.

In the value 1706,

$$l : y = -\frac{1}{x_n^2}(x - x_n) + \frac{1}{x_n} + d$$

(or

$$l(x_a) = -\frac{1}{x_n^2}(x - x_a) + \frac{1}{x} + d$$

)

expressing a line segment contacted with

$$f(x) = \frac{1}{x} + d$$

will be considered. In addition, a point crossing with

$$g(x) = \frac{1}{x} - d$$

is applied as each of resolutions 1707, 1708.

In the resolution 1707 and the resolution 1708, under utilization of the fact that

$$l(x_{\bullet}) = -\frac{1}{x_n^2}(x - x_{\bullet}) + \frac{1}{x} + d$$

and

$$g(x) = \frac{1}{x} - d$$

are equal to each other,

$$l(x) - g(x) = -\frac{1}{x_n^2}x + \frac{1}{x_n}d - \frac{1}{x} + d$$
$$= -\frac{1}{x_n^2}x + 2\left(\frac{1}{x_n} + d\right) - \frac{1}{x} = 0$$

is formulated and this resolution is calculated and then a distance between the resolution 1707 and the resolution 1708 is calculated. This equation has the same value as that of

$$\frac{1}{x_n^2}x^2 - 2\left(\frac{1}{x_n} + d\right)x + 1 = 0$$

and its resolution is

$$x = x_p, x_q = \left(x_n + d\, x_n^2\right) \pm x_n^2 \sqrt{d}\sqrt{d + \frac{2}{x_n}}$$

, so that a distance between the two resolutions is given by the value 1712.

A desired allowable error is replaced with the allowable error 1721 to cause the distance of the resolutions to be attained by the number 1712, thereby it becomes apparent to what segments the definition region ($0.5 \leq R_m < 1.0$) of the given divisor is divided.

In reference to

$$\delta_{n+1} = -R_m \cdot \delta_n^2$$

where,

$$Y_\infty = Y_n + \delta_n$$

it is apparent that a slight error is allowable in a range of $R_m < 1.0$ and so it is possible to decrease a precision of calculation within this range and to reduce the circuits.

Applicability in Industry:

Application of the invention related to Claim 1 enables an initial value having a required precision to be attained under a combination of a small-sized table and an operation unit without using a large-sized table storing the initial value.

Application of the invention related to Claim 2 enables an initial value having a required precision to be attained under a combination of a simple subtractor and a multiplication unit. In addition, its configuration is simple and it is easy to calculate a size of the minimum table to be required, i.e. a capacity of the memory.

Application of the invention related to Claim 3 enables a required table to be small in size a compared with that of the invention related to Claim 2 so as to attain an initial value of the same precision. A configuration 400 is a basic configuration. A configuration 450 enables a square operation unit 456 to be small in size.

Application of the inventions related to Claim 4 and Claim 5 enables a conflict in utilization of operation resources to be avoided, a flow of operation data to run completely in one direction, an entire circuit to become a pipeline and then a throughput of operation to be improved. In addition, a construction of the exclusive circuit enables an operational procedure which is most preferable for the N/R method to be employed and it becomes possible to apply a procedure for saving a circuit resource or shortening an operation time.

Application of the invention related to Claim 6 enables a part of the multiplication circuit to be eliminated to reduce a circuit size and an operation speed to be improved.

Application of the invention related to Claim 7 enables a part of the multiplication circuit to be eliminated to reduce a circuit size and an operation speed to be improved.

Application of the invention related to Claim 8 enables a precision in operation to be improved by adding a multiplication unit, a circuit size to be reduced and at the same time an operation speed to be improved irrespective of the fact that the prior art N/R method requires an addition of the iteration time to improve a precision in operation and multiplication of twice must be performed in one time of iteration. In addition, application of the multiplication unit 705 enables the number of valid bits of the initial value 104 multiplied by series to be reduced and the number of circuits required in the multiplication unit 705 to be reduced. Additionally, a factorial calculator is added in addition to the multiplication unit, thereby it becomes possible to improve a precision in calculation without increasing a calculation time. In addition, it causes a value of term of higher level to be entered in the table and an application for easily improving a precision to be expanded.

Application of the invention related to Claim 9 enables a precision in operation to be improved only by adding a multiplication unit, a circuit size to be reduced and at the same time an operation speed to be improved irrespective of the fact that the prior art N/R method requires an addition of the iteration time to improve a precision in operation and multiplication of twice must be performed in one time of iteration. In addition to the multiplication unit, a factorial calculator is added to enable a precision of operation to be improved without increasing an operation time. Additionally, application of the multiplication unit 803 causes the number of valid bits of the initial value 104 multiplied by the series to be reduced and also the number of circuits required in the multiplication unit 803 to be reduced. This effect may also be applicable in the multiplication units 902 and 1002.

Application of the invention related to Claim 10 enables a part of series calculation, i.e. either a multiplication unit or a factorial calculator to be replaced with a memory storing the table, a size of the circuit to be reduced and further an operation speed to be improved. In particular, this is effective in the case that a precision of operation is to be improved by several bits while the calculation of series is being finished in the midway in its operation.

Application of the invention related to Claim 11 enables a precision of operation to be improved more by several bits and a card bit to be produced irrespective of the fact that an initial value having a precision of 12 bits, for example, is provided and a reciprocal number of precision of 24 bits is attained.

Application of the invention related to Claim 12 enables a reciprocal number of precision of 51 bits to be easily attained by applying a reciprocal number of precision of 17 bits to the initial value, for example, and at the same time adding of precision of operation by more than 2 bits under application of the table enables an operation of twice precision of IEEE 754 to be carried out. Or, applying a reciprocal number of precision of 18 bits to the initial value enables the reciprocal number of precision of 54 bits to be easily attained and at the same time adding of the precision of operation under application of the table enables a sufficient guard bit to be provided in an operation of multiple precision of IEEE 754.

Application of the invention related to Claim 13 enables an initial value of precision of 12 bits, for example, to be given and easily expanded to a precision of 48 bits and further enables an operation of multiple precision of IEEE 754 to be carried out. Or, a reciprocal number is calculated in a multiple precision, this is multiplied by a dividend of simple precision and it becomes possible to apply a rounding in accordance with a rule of operation of simple precision of IEEE to the result of entire division.

Application of the invention related to Claim 14, for example, applying a reciprocal number of precision of 18 bits to the initial value enables a reciprocal number of precision of 54 bits to be easily attained and further a sufficient reciprocal number to be produced in an operation of multiple precision of IEEE754.

Application of the invention related to Claim 15 causes an initial value of precision of 12 bits, for example, to be given and a reciprocal number of precision of 48 bits to be produced and this is multiplied by a dividend of simple precision, resulting in that it becomes possible to apply a rounding in accordance with a standard of simple precision of IEEE in the entire division. Or, it becomes possible to apply an initial value of precision of 14 bits and to perform an operation of double precision (a precision of 53 bits) of IEEE754.

Applying the invention related to Claim 16 enables a multiplication to be carried out continuously or an operation speed of the circuit of the present invention where both a multiplication and an adding or subtraction are alternatively carried out to be improved.

Applying the invention related to Claim 17 enables a table used in a calculation of initial value to be stored in a look-up table and further either a reciprocal number operating circuit or a division circuit to be practically mounted on the PLD having a high restriction in a circuit resource.

Applying the invention related to Claim 18 enables a table of values of series to be stored in a look-up table and then a precision in operation to be easily improved even on the PLD having a high restriction on a circuit resource.

Applying the invention related to Claim 19 enables a minimum requisite size of table, i.e. a memory capacity to be calculated and a circuit of minimum size to be designed while a required specification of the precision of operation is being satisfied.

**Claims**

1. A division procedure having a minor capacity memory in which an approximate value of a reciprocal number of a divisor is attained from the divisor given when a division is carried out, an iteration calculation of a Newton-Raphson method is carried out more tan once wit this value being applied as an initial value to attain a reciprocal number of requisite precision, and this value is multiplied by a dividend to perform a division characterized in that the initial value of an iteration calculation of the Newton-Raphson method is attained by inputting a value in which a bit-string expressing a mantissa part of the given divisor is divided into a plurality of bit fields and retrieved from a table stored in a memory wit their content being applied as index and inputting the content of the bit fields into an arithmetic operation circuit to perform an operation.

2. A division procedure having a minor capacity memory according to Claim 1 characterized in that the bit-string expressing a mantissa part of the given divisor is divided into three bit fields except 1 bit of MSB, two values are retrieved from the memory wit the content of the bit field at the MSB side being applied as an index, a primary approximation is carried out wit them and the content of the intermediate bit field to calculate the initial value.

3. A division procedure having a minor capacity memory according to Claim 1 characterized in that the bit-string constituting a mantissa part of a given divisor is divided into three bit fields except 1 bit of the MSB side, the value is retrieved from the memory with the content of the bit field at the MSB side being applied as an index, a secondary approximation is carried out with them and the content of the intermediate bit field to calculate the initial value.

4. A division procedure having a minor capacity memory according to any one of Claims 1 to 3 characterized in that there is exclusively provided a circuit for performing an iteration calculation of the Newton-Raphson method.

5. A division procedure having a minor capacity memory in which an approximate value of a reciprocal number of a divisor is attained from the divisor given when a division is carried out, an iteration calculation of a Newton-Raphson method is carried out more than once wit this value being applied as an initial value to attain a reciprocal number of requisite precision, and this value is multiplied by a dividend to perform a division characterized in that there is provided exclusively a circuit for performing an iteration calculation of the Newton-Raphson method.

6. A division procedure having a minor capacity memory according to any one of Claims 1 to 5 characterized in that a lower level bit is set to 0 by rounding an initial value to a minimum precision required for operation when an iteration calculation of the Newton-Raphson method is carried out and a part of a multiplication circuit used in an iteration calculation is eliminated.

7. A division procedure having a minor capacity memory according to any one of Claims 1 to 6 characterized in that a formula of an iteration calculation of the Newton-Raphson method is modified to separate a difference and a part of the multiplication circuit used for an iteration calculation is eliminated under utilization of the fact that less amount of information is required for the operation of this difference.

8. A division procedure having a minor capacity memory according to any one of Claims 1 to 7 characterized in that a calculation of series is carried out in a limitless number of times for a product of an initial value and a divisor on the basis of a value subtracted from 1.0 and a precision in operation of a reciprocal number is improved by multiplying it by the initial value.

9.  A division procedure having a minor capacity memory according to any one of Claims 1 to 7 characterized in that a calculation of series of definite terms is carried out in a limitless number of times for a product of an initial value and a divisor on the basis of a value subtracted from 1.0 and a precision in operation of a reciprocal number is improved by multiplying it by the initial value.

10. A division procedure having a minor capacity memory according to Claim 8 or Claim 9 characterized in that a value of calculation of series is stored in a memory as a table, a value retrieved from the table with the content of a bit field extracted from a bit-string expressing a value subtracting a product of an initial value and a divisor from 1.0 being applied as an index is replaced with a part of the calculation of series.

11. A division procedure having a minor capacity memory according to Claim 8 in which a value of

$$\sum_{i=2}^{\infty} \beta^{i}$$

$[\beta = (1 - Y_0 \cdot R_m)$

$Y_0$ is an initial value and $R_m$ is a mantissa part of a divisor]

is stored in a memory as a table, and a value retrieved from the table with a content of the bit field extracted from a bit-string expressing a value of a product of an initial value and a divisor subtracted from 1.0 being applied as an index is used to perform a calculation indicated in

$$Y_{\infty} = Y_0 \cdot (1 + \beta + \sum_{i=2}^{\infty} \beta^{i})$$

12. A division procedure having a minor capacity memory according to Claim 8 in which a value of

$$\sum_{i=3}^{\infty} \beta^{i}$$

is stored in a memory as a table, and a value retrieved from the table with a content of the bit field extracted from a bit-string expressing a value of a product of an initial value and a divisor subtracted from 1.0 being applied as an index is used to perform a calculation indicated in

$$Y_{\infty} = Y_0 \cdot (1 + \beta + \beta^{2} + \sum_{i=3}^{\infty} \beta^{i})$$

13. A division procedure having a minor capacity memory according to Claim 8 in which a value of

$$\sum_{i=4}^{\infty}\beta^i$$

is stored in a memory as a table, and a value retrieved from the table with a content of the bit field extracted from a bit-string expressing a value of a product of an initial value and a divisor subtracted from 1.0 being applied as an index is used to perform a calculation indicated in

$$Y_{\infty} = Y_0 \cdot (1 + \beta + \beta^2 + \beta^3 + \sum_{i=4}^{\infty}\beta^i)$$

**14.** A division procedure having a minor capacity memory according to Claim 9 in which a calculation indicated in

$$Y=Y_0 \cdot (1+\beta+\beta^2)$$

is carried out.

**15.** A division procedure having a minor capacity memory according to Claim 9 in which a calculation indicated in

$$Y=Y_0 \cdot (1+\beta+\beta^2+\beta^3)$$

is carried out.

**16.** A division procedure having a minor capacity memory according to any one of Claims 1 to 9 in which a calculation time is shortened by applying an operation circuit for redundancy expression in a combination of consecutive adding and multiplication in a calculation of initial value, an iteration calculation and a calculation using a value in which a product of an initial value and a divisor is subtracted from 1.0.

**17.** A division procedure having a minor capacity memory according to any one of Claims 1 to 3 characterized in that it is practically mounted in a look-up table type programmable logic device, the look-up table is used as a small-sized ROM memory, a table used for a calculation of an initial value is stored in the memory and practically mounted.

**18.** A division procedure having a minor capacity memory according to any one of Claims 1 to 3 characterized in that it is practically mounted in a look-up table type programmable logic device, the look-up table is used as a small-sized memory, and a table of value of a part of calculation of series is stored in the memory.

**19.** A division procedure having a minor capacity memory according to Claim 2 in which a method for calculating a capacity required for a memory for storing a table is applied and a minimum limited amount of memory is used.

100

Rm = 0.100110000101000101100010

Mantissa Part

|1|0|0|1|1|0|0|0|0|1|0|1|0|0|0|1|0|1|1|0|0|0|0|1|0|

Nx = 00110

Ny = 000101000

Nz = 101100010

|1| |0|0|1|1|0| |0|0|0|1|0|1|0|0|0| |1|0|1|1|0|0|0|1|0|

Nx Ny Nz

120 121

Fig. 1

Fig. 2

**Fig. 3**

400

100

$R_m$

MSB 1

LSB

121

120

memory    memory    memory

401

adder

403

402

square unit

404

multiplication unit

405

406

adder/ subtractor

407

$y_0$

104

**Fig. 4A**

450

100

$R_m$

MSB

LSB

121

120

memory    memory    memory    memory

451

452

453

adder/ subtractor

454

455

multiplication unit

square unit

456

457

multiplication unit

458

adder/subtractor

459

$y_0$

104

**Fig. 4B**

501    502    503    504        100

```
       ┌──────────────────┐              ┌──────────┐
       │ mantissa part    │              │   R m    │
       │ of a dividend    │              └────┬─────┘
       └─────┬────────────┘                   │
             │              ┌──────────────┐   │
             │              │ initial value│   │
             │              │ calculating  │◄──┤
             │              │ circuit      │   │
             │              └──────┬───────┘   │
             │                     │           │
             │              ┌──────▼───────┐   │  ─── 104
             │              │ a multiplica-│◄──┘
             │              │ tion unit    │
             │              │ having a     │
             │              │ corrector    │
             │              │ unit         │
             │              │ Q=2-Y₀·Rₘ    │
             │              └──────┬───────┘
             │                     │          ─── 505
             │              ┌──────▼───────┐
             │              │ multiplica-  │
             │              │ tion unit    │
             │              │ Y₁=Q·Y₀      │
             │              └──────┬───────┘  ─── 106
             │                     │          ─── 506
             │              ┌──────▼───────┐
             └─────────────►│ multiplica-  │
                            │ tion unit    │
                            └──────┬───────┘
                                   │          ─── 507
                            mantissa part
                            of quotient
```

Q = $2 - Y_0 \cdot R_m$

$Y_1 = Q \cdot Y_0$

Fig. 5

501        601      504              100

```
mantissa part of                    R_m
a dividend
```

initial value calculating
circuit

————— 104

a multiplication unit
having a corrector unit
$\beta = 1.0 - Y_0 \cdot R_m$

————— 111
————— 602

multiplication unit
$\Delta Y = Y_0 \cdot \beta$

————— 603
————— 109

adder
$Y_1 = Y_0 + \Delta Y$

————— 604
————— 605
————— 106

multiplication unit

————— 506

mantissa part
of quotient

————— 507

Fig. 6

501    100    504                    104

```
┌──────────────────────────────────────────────────────────────────┐
│  ┌──────────────────┐    ┌──────┐    ┌──────────────────┐         │
│  │ mantissa part of │    │  R   │──▶ │ initial value    │         │
│  │ a dividend       │    │   m  │    │ calculating circuit│        │
│  └──────────────────┘    └──────┘    └──────────────────┘         │
│          │                   │                 │                   │
│          │                   ▼                 ▼                   │
│          │           ┌──────────────────────┐                601  │
│          │           │ a multiplication unit│                      │
│          │           │ having a corrector unit│                    │
│          │           │ β = 1.0 - Y₀ · Rₘ     │                 104 │
│          │           └──────────────────────┘                      │
│          │                   │                                701  │
│          │                   ▼                                      │
│          │           ┌──────────────────┐                          │
│          │           │ multiplication unit│                         │
│          │           │ β² = β · β        │                      702 │
│          │           └──────────────────┘                          │
│          │                   │                                      │
│          │                   ▼                                      │
│          │           ┌──────────────────┐                          │
│          │           │ multiplication unit│                     703 │
│          │           │ β³ = β² · β       │                          │
│          │           └──────────────────┘                          │
│          │                   │                                      │
│          │                   ▼                                      │
│          │           ┌──────────────────┐                          │
│          │           │ multiplication unit│                         │
│          │           │ β⁴ = β³ · β       │                      704 │
│          │           └──────────────────┘                          │
│          │                   │                                      │
│          │           ┌──────────────────┐                          │
│          │           │      adder        │                     705 │
│          │           └──────────────────┘                          │
│          │                   │                                      │
│          │           ┌──────────────────┐                          │
│          │           │ multiplication unit│                     706 │
│          │           └──────────────────┘                          │
│          │                   │                                      │
│          │           ┌──────────────────┐                      707 │
│          │           │      adder        │                         │
│          │           └──────────────────┘                     506 │
│          │                   │                                      │
│          ▼                   ▼                                      │
│  ┌──────────────────────────────┐                                  │
│  │   multiplication unit        │                             507 │
│  └──────────────────────────────┘                                  │
│                │                                                   │
│                ▼                                                   │
│         mantissa part                                              │
│         of quotient                                                │
└──────────────────────────────────────────────────────────────────┘
```

$\beta = 1.0 - Y_0 \cdot R_m$

$\beta^2 = \beta \cdot \beta$

$\beta^3 = \beta^2 \cdot \beta$

$\beta^4 = \beta^3 \cdot \beta$

**Fig. 7**

Fig. 8

501   100   504   104

mantissa part of
a dividend

$R_m$

initial value
calculating circuit

a multiplication unit
having a corrector unit
$\beta = 1.0 - Y_0 \cdot R_m$

601

104

memory
$$\sum_{i=2}^{\infty} \beta^i$$

905

154

adder

901

multiplication unit

902

adder

903

904

multiplication unit

506

mantissa part
of quotient

507

F i g. 9

501   100   504   104

mantissa part of a dividend

$R_m$

initial value calculating circuit

a multiplication unit having a corrector unit
$\beta = 1.0 - Y_0 \cdot R_m$

601

multiplication unit
$\beta^2 = \beta \cdot \beta$

104

701

memory
$$\sum_{i=3}^{\infty} \beta^i$$

1005

155

adder

1001

multiplication unit

1002

adder

1003

1004

multiplication unit

506

mantissa part
of quotient

507

F i g.  1 0

Fig. 11

F i g. 1 2

102

1201

$$Y = \frac{1}{X}$$

1301

100

$R_m$

Fig. 13

Fig. 14

Fig. 15

Fig. 16

$$l : y = -\frac{1}{x_n^2}(x - x_n) + \frac{1}{x_n} + d \qquad \text{1701}$$

$$l(x_n) = -\frac{1}{x_n^2}(x - x_n) + \frac{1}{x} + d \qquad \text{1702}$$

$$f(x) = \frac{1}{x} + d \qquad \text{1703}$$

$$g(x) = \frac{1}{x} - d \qquad \text{1704}$$

$$y = \frac{1}{x} \qquad \text{102}$$

1706

1720

1721

1707

1708

$w(x_n)$

$x_p \qquad x_n \qquad x_q \qquad x$

$d$

at $x = x_p, x_q$, $\quad l(x_p) = g(x_p), l(x_q) = g(x_q)$

$$l(x) - g(x) = -\frac{1}{x_n^2} x + \frac{1}{x_n} \; d - \frac{1}{x} + d \qquad \text{1709}$$

$$= -\frac{1}{x_n^2} x + 2\left(\frac{1}{x_n} + d\right) - \frac{1}{x} = 0$$

$$\Longleftrightarrow \frac{1}{x_n^2} x - 2\left(\frac{1}{x_n} + d\right) x + 1 = 0 \quad (0 < x) \qquad \text{1710}$$

$$\longrightarrow \quad x = x_p, x_q = (x_n + d\, x_n) \pm \sqrt{d}\sqrt{d + \frac{2}{x_n}} \qquad \text{1711}$$

$$w(x_n) = x_q - x_p = 2\sqrt{d}\sqrt{d + \frac{2}{x_n}} \qquad \text{1712}$$

In the definition region $0.5 \leqq x_n < 1.0$, $\frac{1}{64} < w(x_n)$

(here $d = 2^{-12}$)

Fig. 17

# INTERNATIONAL SEARCH REPORT

| International application No. |
|---|
| PCT/JP99/03352 |

**A. CLASSIFICATION OF SUBJECT MATTER**
Int.Cl⁶ G06F7/52, G06F1/02, G06F101:08

According to International Patent Classification (IPC) or to both national classification and IPC

**B. FIELDS SEARCHED**

Minimum documentation searched (classification system followed by classification symbols)
Int.Cl⁶ G06F7/52, G06F1/02

Documentation searched other than minimum documentation to the extent that such documents are included in the fields searched
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 4-314126, A (NEC Corp.),<br>5 November, 1992 (05. 11. 92) (Family: none) | 1, 2<br>3-19 |
| X<br>Y | JP, 7-200266, A (Weitek Corp.),<br>4 August, 1995 (04. 08. 95)<br>& US, 5280439, A | 1, 3<br>2, 4-19 |
| Y | JP, 2-114324, A (NEC Corp.),<br>26 April, 1990 (26. 04. 90) (Family: none) | 7-16, 18 |
| Y | JP, 10-49347, A (New Japan Radio Co., Ltd.),<br>20 February, 1998 (20. 02. 98) (Family: none) | 7-16, 18 |
| Y<br>A | JP, 7-49772, A (Hewlett-Packard Co.),<br>21 February, 1995 (21. 02. 95)<br>& US, 5341321, A | 8-16, 18<br>1-7, 17, 19 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 20 September, 1999 (20. 09. 99) | 5 October, 1999 (05. 10. 99) |

| Name and mailing address of the ISA/<br>Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP99/03352

**Box I** Observations where certain claims were found unsearchable (Continuation of Item 1 of first sheet)

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II** Observations where unity of invention is lacking (Continuation of Item 2 of first sheet)

This International Searching Authority found multiple inventions in this international application, as follows:

The invention of claim 1 relates to a method for reducing the table for finding an initial value in the reciprocal calculation by the Newton-Raphson method.
The invention of claim 5 relates to a method for improving the throughput by providing a special-purpose circuit for iterative calculation in the reciprocal calculation by the Newton-Raphson method.
These inventions concern different problems and include different means for solving the problems, and therefore there is no technical relationship among those inventions involving one or more of the same or corresponding technical features.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1992)